# EUROPEAN PATENT SPECIFICATION

(11) **EP 2 933 594 B1**
(45) Date of publication and mention of the grant of the patent: **19.06.2019**
(21) Application number: 14164954.1
(22) Date of filing: 16.04.2014
(51) Int. Cl.: F28D 20/00

(54) **Passive way to improve heat distribution in packed bed storage**
Passive Möglichkeit zur Verbesserung der Wärmeverteilung bei einer Festbettspeicherung
Manière passive permettant d'améliorer la répartition de la chaleur dans un stockage à lit tassé

(43) Date of publication of application: 21.10.2015
(73) Proprietor: Siemens Gamesa Renewable Energy A/S, 7330 Brande (DK)
(72) Inventor: Koschnitzke, Dirk, 06420 Könnern (DE); Ustinov, Victor, 91056 Erlangen (DE)
(74) Representative: Aspacher, Karl-Georg

(56) References cited:
- EP-A1- 0 012 037
- WO-A1-2013/005196
- DE-A1- 10 007 639
- DE-A1-102005 001 347

## Description

### Field of invention

The present invention relates to a system for storing heat according to the preamble of claim 1 and to a method for manufacturing a system for storing heat according to claim 15. EP 0 012 037 discloses such a system.

### Art Background

Nowadays, to improve the efficiency of power plants on the one hand and to smooth network fluctuations caused by the time dependent electrical consumptions on the other hand, integration of thermal energy storages in the power plant system plays a role of increased importance. Several types of thermal energy storages developed recently are available today.

Thermal energy storages are subdivided into the following classes. Solid bed storages which use heat capacity of filled material, known e.g. from EP 0 012 037 A1 or DE 10 2005 01347 A1, liquid thermal storages which use a phase change enthalpy, e.g. known from DE 100 07 639 A1 and storages which use chemical reaction enthalpy could provide required storing ability of thermal energy.

The solid bed storages are filled with heat storing elements, such as stones, bricks or ceramic parts which are a cost effective solution.

The storage dynamics during the charging and discharging phase and the storage efficiency can be improved using preventive measures reducing negative influence of natural and forced convection effects occurring in the storage medium. These effects are taking place during the whole process cycle, i.e. in the charging phase, in the quasi-steady-state (only natural convection) and in the discharging phases. A non-linear impact of natural and forced convection during the charging and discharging phases is resulting in a declination of isothermals in the storage medium. The hot working fluid has a lower density which migrates to the top layers of the heat storage and thereby leads to a change in the temperature field in the storage medium on the one hand and distribution or declination of isothermals on the other hand.

Construction features (e.g. large cross section area of storage medium) and engineering features (e.g. design of the incoming flow) require segmentation of the incoming flow of working fluid into multiple streams of the working fluid. Hence, segmentation of the mass flow rate over the full cross section of the thermal storage area is necessary. The distribution of the total mass flow rate of the incoming working fluid into the storage depends on the selected geometry of the manifold which is to be used.

The declination of the angle of the isothermals in the storage medium to the flow direction of the working fluid is strongly dependent on the building/storage height and leads to an increase of temperature discrepancies in the inlet and outlet sections of the storage during the dynamic phases and thus to a decrease of the average outlet temperature leaving the system through the outlet section. This effect increases in the case that the storage designed for segmentation of the working flow has multiple inlets or outlets distributed vertically over the cross section of the storage.

### Summary of the Invention

It may be an objective of the invention to provide a heat storage with proper internal heat distribution.

This objective is solved by a system for storing heat and by a method for manufacturing a system for storing heat according to the independent claims.

According to a first aspect of the present invention, a system for storing heat (i.e. thermal energy) is presented. The system comprises a housing with a storage volume, wherein the housing comprises an opening for connecting the storage volume to an environment. The system further comprises a first type of first heat storing elements which is arranged within a first location within the storage volume and a second type of second heat storing elements which is arranged within a second location within the storage volume. The first heat storing elements of the first type comprise a respective first element size, wherein the second storing elements of the second type comprise a respective second element size. The first storing element size differs from the second element size. The system comprises a first housing section and the storage volume comprises a first storage volume, wherein the first housing comprises a first opening forming the opening for connecting the first storage volume to an environment. The system further comprises a first type of first heat storing elements which is arranged within the first housing section forming the first location. The housing further comprises a second housing section and the storage volume comprises a second storage volume, wherein the second housing section comprises a second opening for connecting the second storage volume to the environment. The first storage volume and the second storage volume are interconnected for forming a common storage volume. The system further comprises a second type of second heat storing elements which is arranged within the second housing section forming the second location.

According to an exemplary embodiment, the housing section further comprises a further opening for connecting the storage volume to the environment, wherein the further opening is spaced apart from the opening. The first type of first heat storing elements is arranged within the opening forming the first location, wherein the second type of second heat storing elements is arranged within the further opening forming the second location.

According to a further exemplary embodiment, the housing section further comprises a center section arranged between the opening and the further opening, wherein an additional further type of additional further heat storing elements is located within the centre section. The additional further storing elements of the additional further type comprise a respective additional further element size, wherein the additional further heat storing element size differs from the first element size and/or the second element size.

According to a first aspect of the present invention, a system for storing heat (i.e. thermal energy) is presented. The system comprises a first housing section and the storage volume comprises a first storage volume, wherein the first housing comprises a first opening forming the opening for connecting the first storage volume to an environment. The system further comprises a first type of first heat storing elements which is arranged within the first housing section forming the first location. The housing further comprises a second housing section and the storage volume comprises a second storage volume, wherein the second housing section comprises a second opening for connecting the second storage volume to the environment. The first storage volume and the second storage volume are interconnected for forming a common storage volume. The system further comprises a second type of second heat storing elements which is arranged within the second housing section forming the second location. The first heat storing elements of the first type comprises a respective first element size, wherein the second storing elements of the second type comprise a respective second element size. The first element size differs from the second element size. The system according to the present invention comprises the housing which is formed of the first housing section and the second housing section. The first housing section and the second housing section may comprise a rectangular or elliptical cross section. The housing sections may be made of metal material, for example. The housing sections are surrounded by an environment, wherein the housing sections comprise material and/or an additional insulation layer comprising good thermal isolating characteristics such that convection between the environment and the storage volume of the housing sections is reduced and minimised. The system may comprise a centre axis and a symmetry axis, respectively, wherein along the centre axis, the first housing section, the second housing section and the plurality of further housing sections may be arranged one after another.

The first housing section has a first storage volume and the second housing section has a second storage volume. The first housing section and the second housing section are arranged with respect to each other such that the first housing section and the second housing section form together an overall common storage volume build of the first storage volume and the second storage volume.

The first opening may be formed at a wall section of the first housing section. The first opening is adapted for connecting the first storage volume to the environment. In other words, a working fluid may flow from the environment through the first opening into the first storage volume. However, in another operating mode of the system for storing heat, working fluid may flow from the first storage volume through the first opening into the environment.

Accordingly, the second opening may be formed at a wall section of the second housing section. The second opening is adapted for connecting the second storage volume to the environment. In other words, a working fluid may flow from the environment through the second opening into the second storage volume. However, in another operating mode of the system for storing heat, working fluid may flow from the second storage volume through the second opening into the environment.

The first type of first heat storing elements is arranged within the first housing section and the second type of second heat storing element is arranged within the second housing section. The first heat storing elements and the second heat storing elements may be bulk material made of stones, bricks, lava stone or ceramic parts. The respective heat storing elements are made of a material with a high heat capacity.

The size of the heat storing elements may be defined by the diameter or the element volume. Furthermore, the size of the heat storing element may be defined by the so called Sauter mean diameter which describes an average of the element size of the elements of the (first or second) type. The Sauter mean diameter is defined as the diameter of a sphere that has the same volume/surface area ratio as a heat storing element of interest. Because the size for all heat storing elements of one type may slightly vary, a type may be defined such that at least 80% or more of heat storing elements of the type have a predetermined desired size.

The above described system for storing heat may be applied in power plants, in particular in solar power plants, where heat is produced without needing a high electric power generation. In this case, heat storing systems are applied in order to store heat (thermal energy) till a higher electric power generation is required. Accordingly, the environment surrounds the respective openings and the housing sections, respectively. The openings may be coupled to a power plant system which may be a heat generating system or heat converting machine or system, respectively.

An operating cycle of an above described storage system is subdivided into three operating modes:
- A charging phase of the storage system - A working fluid (such as steam, liquid or gaseous medium) that is generated by a heat source, such as a power plant, has a higher temperature than an initial temperature of the heat storing elements. The working fluid is blown into the storage through the respective openings;
- A quasi steady-state phase of storage system - A closed system is present, where no heat exchange with external heat sources exists. The heat storing elements cool down through the natural convection and system heat losses; and
- A discharging phase - The working fluid is generated by a source and has lower temperature then temperature of the heat storing elements. The working fluid is blown into the storage system through the respective openings, e.g. from the opposite side in comparison to the charging phase.

The heat storing elements are to be heated (charging process) or cooled (discharging process) up/down to a certain required temperature using the working fluid (gas/liquid/mixture). Thus, the storage system working fluid used for charging and discharging processes is guided through the first or second (inlet) openings or respective first or second (outlet) openings of the storage system and is heated up or cooled down by the heat storing elements to the required thermal conditions.

Efficiency of the thermal storage strongly depends on the process dynamics during the charging/discharging phases, special thermo-physical and geometrical storage and material properties of the heat storing elements, in particular the permeability and thermodynamic boundary conditions of the heat storing elements.

This means that for the efficiency and the lifespan of the heat storage it is beneficial that the storage heat elements heat up or cooled on constantly along the whole cross section of the common storage volume. In order to achieve this goal, a mass flow of the working fluid is divided into a first mass flow which is guidable through the first opening and into a second mass flow which is guidable through a second mass. However, if the second housing section is arranged for example particularly above the first housing section, the working fluid moves additionally vertically inside the common storage volume, e.g. from the first storage volume to the second storage volume.

Hence, in order to provide a homogeneous warming or cooling of the first and second heat storing elements, the first mass flow and the second mass flow has to be regulated in order to balance and compensate the movement of the thermal energy from the first storage volume to the second storage volume.

Hence, by the approach of the present invention, the amount of the first mass flow of the working fluid and the second mass flow of the working fluid through the respective openings is controlled by amending the size of the respective heat storing elements. For example, in a common housing, at least two different types of first and second heat storing elements are arranged at a respective first and second location. The first and second locations may be arranged within a housing section or the first location may be located in the first housing section and the second location may be arranged in the second housing section. Specifically, a first type of first heat storing elements comprises a larger or smaller sized heat storing elements than a second type of second heat storing elements. For example, a flow rate of working fluid through larger sized first heat storing elements (with respect to smaller sized second heat storing elements) may be higher than a flow rate of the working fluid through smaller sized heat storing elements (with respect to larger sized first heat storing elements), and vice versa.

Hence, by predefining the size of the respective heat storing elements in the first storage volume and the second storage volume, the mass flow of the respective working fluid flowing through the respective first or second storage volume and hence the thermal exchange between the first and second storage volume can be controlled in particular in a passive way. This means that no active controlling mechanism comprising for example movable parts is necessary.

According to a further exemplary embodiment, the first housing section comprises a first centre section and a first opening section which comprises the first opening, wherein the first type of first heat storing elements is arranged within the first opening section. Hence, because the first type of first heat storing elements is arranged within the opening section, the inlet mass flow or the outlet mass flow of the working fluid is controllable by the desired and predefined size of the first heat storing elements of the first type.

According to a further exemplary embodiment, the first opening section comprises a tapering profile in such a manner that a flow diameter at the first opening is smaller than at a transition section between the first opening section and the first centre section for forming a diffusor section or a nozzle section, respectively. Hence, depending on the flow direction of the working fluid, the opening section functions as a diffusor or a nozzle in order to provide a desired flow characteristics of the working fluid inside or out of the storage volume.

Diffusors at the first opening section (charging/fluid inlet side) and confusors/nozzles (discharging/fluid outlet side) at the further first opening section of the first housing section improve the working fluid distribution in the storage medium. Furthermore, first and further first opening section (i.e. diffusors and confusors) filled with the respective heat storing elements are improving inlet/outlet working flow distribution of the working fluid.

According to a further exemplary embodiment, the first type of first heat storing elements is additionally arranged within the first centre section.

According to a further exemplary embodiment, the system further comprises a further first type of further first heat storing elements, wherein the further first heat storing elements differ in size and/or material from the first heat storing elements. The further first type of first heat storing elements is additionally arranged within the first centre section. Hence, by the above described embodiment, the first type of first heat storing elements may be only arranged within the opening section, whereas in the first centre section, a further type of heat storing elements, comprising for example a different material and/or a different size with respect to the heat storing elements of the first type may be arranged.

According to a further exemplary embodiment, the first housing further comprises a further first opening for connecting the first storage volume to the environment, wherein the further first opening is spaced apart from the first opening. Specifically, the further first opening may be arranged at an opposed side wall section of the first housing section in comparison to a wall section where the above described first opening is arranged. More specifically, the first opening may function as an inlet opening for injecting the working fluid into the first storage volume and the further first opening may function as an outlet opening for exhausting the working fluid out of the first storage volume.

According to a further exemplary embodiment, the first housing section comprises a further first opening section which comprises the further first opening. The first type of the first heat storing elements is arranged within the further first opening section. In other words, in the respective first opening section and in the further first opening section, the first type of heat storing elements is arranged, wherein in the centre section of the first housing section, a heat storing elements comprising a different material and/or size with respect to the heat storing elements of the first type. However, also a heat storing element that differs to the first type and to the further fist type of heat elements is arrangeable within the further first opening section.

According to a further exemplary embodiment, the second housing section comprises a second centre section and a second opening section which comprises the second opening. The second type of second heat storing elements is arranged within the second opening section. Hence, because the second type of second heat storing elements is arranged within the second opening section, the inlet mass flow or the outlet mass flow of the working fluid is controllable by the desired and predefined size of the second heat storing elements of the second type.

According to a further exemplary embodiment, the second opening section comprises a tapering profile in such a manner that a flow diameter at the second opening is smaller than at a transition section between the second opening section and the second centre section for forming a diffusor section or a nozzle section, respectively.

According to a further exemplary embodiment, the second type of second heat storing elements is additionally arranged within the second centre section.

According to a further exemplary embodiment, the system comprises a further second type of further second heat storing elements, wherein the further second heat storing elements differ in size and/or material from the second heat storing elements. The further second type of second heat storing elements is additionally arranged within the second centre section. The further second type of second heat storing elements may be additionally arranged within the second centre section. Hence, by the above described embodiment, the second type of second heat storing elements may be only arranged within the second opening section, whereas in the second centre section, a further type of heat storing elements, comprising for example a different material and/or a different size with respect to the heat storing elements of the second type may be arranged.

For example, the further heat storing elements within the first centre section and the second centre section may be made of a similar or same material and/or size, for example.

According to a further exemplary embodiment, wherein the second housing section further comprises a further second opening for connecting the second storage volume to the environment, wherein the further second opening is spaced apart from the second opening. In other words, in the respective second opening section and in the further second opening section, the second type of heat storing elements is arranged, wherein in the second centre section of the second housing section, heat storing elements comprising a different material and/or size with respect to the heat storing elements of the second type.

By the present invention, first and second openings of the respective first and second housing sections are filled with storage material of different diameters (i.e. with heat storing elements (particles) of different size) which leads to different permeability for the working fluid. Specifically, the material diameters of the heat storing elements vary over the (vertical) height of the storage. This provides a combination between the partially filled volume of the diffusor(s) and confusor(s)/nozzle(s) with the storage material and multiple inflow segmentation over the cross section of the first and second housing sections, taking into account the dynamics of the temperature field changes during charging and discharging phases. The varying heat storing element (grain) size provides a passive means to regulate the mass flow through the different segments of the manifold and hence different layers and sections of the storage system.

By the present invention a housing of a storage system comprises along a vertical direction a first, a second or a plurality of housing sections. The respective opening sections of the housing sections are partially filled with storage material (heat storing elements). Along the vertical direction, for every higher-level of opening section (diffusor(s) and nozzle(s)/confusor(s)) and/or for housing sections, respectively, a different size of heat storing elements/grains than the (vertically) lower-level diffusor(s) and confusor(s) are used. The element size of the used material is dependent on physical and geometrical boundary conditions of the designed storage system.

On one hand, partially filled diffusor(s) and confusor(s) are improving the incoming flow distribution across the storage cross section, on the other hand, usage of different material grain/element sizes, i.e. varying of heat storing permeability in upper and lower-levels of the housing sections leads to straightening of isotherms along a vertical direction at a right angle to the preferably horizontal flow of the working fluid in the storage medium during charging and discharging phases of the storage system. Thus, the straightening of the isotherms improves the efficiency of the designed thermal storage system. The two key advantages of the above described invention are the passive nature of controlling the heat distribution during charging and discharging phase (hence no moving or regulated parts) as well as the usage of the storage material itself (hence no additional components like manufactured perforated sheets).

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a schematical view of a storage system according to an exemplary embodiment of the present invention, wherein the storage system is shown in the charging phase; and
- Fig. 2: shows a schematical view of a storage system according to an exemplary embodiment of the present invention, wherein the storage system is shown in the discharging phase.

### Detailed Description

The illustration in the drawings is in schematic form. It is noted that in different figures, similar or identical elements are provided with the same reference signs.

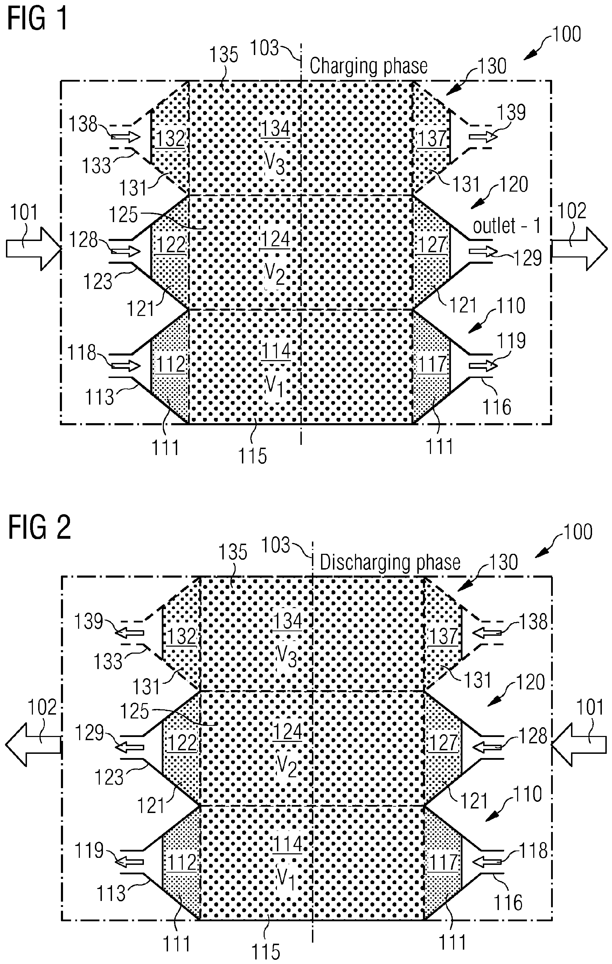

**Fig. 1** and **Fig. 2** show a schematic view of a storage system 100 according to an exemplary embodiment of the present invention. The system 100 comprises a first housing section 110 with a first storage volume V1, wherein the first housing comprises a first opening 113 for connecting the first storage volume V1 to an environment. A first type 111 of first heat storing elements is arranged within the first housing section 110. The system further comprises a second housing section 120 with a second storage volume V2, wherein the second housing section 120 comprises a second opening 123 for connecting the second storage volume V2 to the environment, wherein the first storage volume V1 and the second storage volume V2 are interconnected for forming a common storage volume. A second type 121 of second heat storing elements is arranged within the second housing section 120. The first heat storing elements of the first type 111 comprise a respective first element size, wherein the second storing elements of the second type 121 comprise a respective second element size. The first element size differs from the second element size.

The system 100 comprises the housing which is formed of the first housing section 110, the second housing section 120 and the third housing section 130. The first housing section 110, the second housing section 120 and the third housing section 130 may comprise a rectangular, elliptical cross section. The housing sections 110, 120, 130 may be made of metal material, for example. The housing sections 110, 120, 130 are surrounded by an environment, wherein the housing sections 110, 120, 130 comprise material and/or an additional insulation layer comprising good thermal isolating characteristics such that convection between the environment and the storage volume of the housing sections 110, 120, 130 is reduced and minimized. The system 100 may comprise a center axis 103 and a symmetry axis, respectively, wherein along the center axis 103, the first housing section 110, the second housing section 120, the third housing sections 130 and/or a plurality of further third housing sections 130 may be arranged one after another. The system 100 is formed such that the center axis 103 has at least one component which is parallel to the vertical direction.

The first housing section 110 has a first storage volume V1, the second housing section 120 has a second storage volume V2 and the third housing section 120 has a third storage volume V3. The first housing section 110, the second housing section 120 and the third housing section 130 are arranged with respect to each other such that the first housing section 110, the second housing section 120 and the third housing section 130 form together an overall common storage volume build of the first storage volume V1, the second storage volume V2 and the third storage volume V3.

The first opening 113 is formed at a wall section of the first housing section 110. The first opening 113 is adapted for connecting the first storage volume V1 to the environment. The second opening 123 is formed at a wall section of the second housing section 120. Accordingly, the second opening 123 is adapted for connecting the second storage volume V2 to the environment. The third opening 133 is formed at a wall section of the third housing section 130. The third opening 133 is adapted for connecting the third storage volume V3 to the environment.

Hence, a total inlet flow 101 is separated in a first inlet flow 118 which is guided through the first opening 113 into the first storage volume V1, in a second inlet flow 128 which is guided through the second opening 123 into the second storage volume V2, and in a third inlet flow 138 which is guided through the third opening 133 into the third storage volume V3.

The first type 111 of first heat storing elements is arranged within the first housing section 110, the second type 121 of second heat storing elements is arranged within the second housing section 120 and the third type 131 of third heat storing elements 130 is arranged within the third housing section 130.

As shown in Fig. 1 and Fig. 2, the respective housing sections 110, 120, 130 comprise respective center sections 114, 124, 134. Furthermore, the respective housing sections 110, 120, 130 comprise respective opening sections 112, 122, 132 which comprise the respective openings 113, 123, 133.

In the exemplary embodiment shown in Fig. 1 and Fig. 2, the first type 111 of first heat storing elements is arranged within the first opening section 112, the second type 121 of second heat storing elements is arranged within the second opening section 122 and the third type 131 of third heat storing elements is arranged within the third opening section 132.

Hence, because e.g. the first type 111 of first heat storing elements is arranged within the first opening section 112, the first inlet mass flow 118 (or the first outlet mass flow respectively 119) of the working fluid is controllable by the desired and predefined size of the first heat storing elements of the first type 111.

Furthermore, the second type 121 of second heat storing elements is arranged within the second opening section 122, the second inlet mass flow 128 (or the second outlet mass flow respectively 129) of the working fluid is controllable by the desired and predefined size of the second heat storing elements of the second type 121. Accordingly, the third type 131 of third heat storing elements is arranged within the third opening section 132, the third inlet mass flow 138 (or the third outlet mass flow respectively 139) of the working fluid is controllable by the desired and predefined size of the third heat storing elements of the third type 131.

The respective opening sections 112, 122, 132 comprise e.g. a tapering profile in such a manner that a flow diameter at the respective opening 113, 123, 133 can be smaller than at a transition section between the respective opening sections 112, 122, 132 and the respective center sections 114, 124, 134 for forming a diffusor section or a nozzle section, respectively. Hence, depending on the flow direction of the working fluid, the respective opening sections 112, 122, 132 function as a diffusor or a nozzle in order to provide a desired flow characteristic of the working fluid inside or out of the respective storage volume V1, V2, V3.

Furthermore, as shown in Fig. 1 and Fig. 2, the first housing 110 further comprises a further first opening 116 for connecting the first storage volume V1 to the environment, wherein the further first opening 116 is spaced apart from the first opening 113. Specifically, the further first opening 116 may be arranged at an opposed side wall section of the first housing section 110 in comparison to a wall section where the first opening 113 is arranged. More specifically, in a charging phase as shown in Fig. 1, the first opening 113 may function as an inlet opening for injecting the first inlet flow 118 of the working fluid into the first storage volume V1 and the further first opening 116 may function as an outlet opening for exhausting the working fluid in a first outlet flow 119 out of the first storage volume V1.

Accordingly, the second housing 120 and the third housing section 130 further comprise respective further openings 126, 136 for connecting the respective storage volumes V2, V3 to the environment, wherein the further openings 126, 136 are spaced apart from the respective openings 123, 133. Specifically, the further openings 126, 136 may be arranged at an opposed side wall section of the respective housing sections 120, 130 in comparison to a wall section where the respective opening 123, 133 are arranged. More specifically, in a charging phase as shown in Fig. 1, the openings 123, 133 may function as respective inlet opening for injecting the respective inlet flows 128, 138 of the working fluid into the respective storage volumes V2, V3 and the further openings 126, 136 may function as respective outlet opening for exhausting the working fluid in respective outlet flows 129, 139 out of the respective storage volumes V2, V3.

As shown in Fig. 1 and Fig. 2, the respective housing sections 110, 120, 130 comprise respective further opening sections 117, 127, 137 which comprise the respective further openings 116, 126, 136. The respective types 111, 121, 131 of the respective heat storing elements or respective further types 115, 125, 135 of further heat storing elements are arranged within the respective further opening sections 117, 127, 137. In other words, in the respective opening sections 112, 122, 132 and in the respective opening sections 117, 127, 137, the respective types 111, 121, 131 of heat storing elements are arranged, wherein in the respective center sections 114, 124, 134 of the respective housing section 110, 120, 130, a further type of heat storing elements comprising a different material and/or size with respect to the heat storing elements of the respective type is arranged.

In exemplary embodiments of the present invention, various types of heat storing elements 111, 121, 131 and respective further types 115, 125, 135 of further heat storing elements are arrangeable in the different housing sections 110, 120, 130. For example, one of the housing sections 110, 120, 130 comprises the further type 115, 125, 135 of further heat storing elements located within the respective centre sections 114, 124, 134, wherein the further heat storing elements of the further type 115, 125, 135 comprises a respective further element size. The further storing element size 115, 125, 135 may differ from the first element size of the first heat storing elements of the first type 111, 121, 131 (which may be located within the respective opening sections 112, 122, 131) and/or from an additional further first element size of additional further heat storing elements of an additional further type 111, 121, 131 (which may be located within the respective further opening sections 117, 127, 137).

Accordingly, the first housing section 110 may comprise three different first types 111, 115 of heat storing elements in the first opening section 112, the first centre section 114 and the further first opening section 117.

The second housing section 120 may comprises also three different second types 121, 125 of heat storing elements in the second opening section 122, the second centre section 124 and the further second opening section 127. The three different second types 121, 125 of heat storing elements may have the same size with respect to the three different first types 111, 115. Hence, first and second types 111,115, 121, 125 with three different sizes are used in the first and second housing sections 110, 120.

Alternatively, the three different second types 121, 125 of heat storing elements may have a different size with respect to the three different first types 111, 115. Hence, first and second types 111,115, 121, 1125 with six different sizes are used in the first and second housing sections 110, 120.

Accordingly, the third housing section 130 or additional further hosing sections may be filled with respective types of heat storing elements in the same manner as described above for the first housing section 110 and the second housing section 120.

An operating cycle of the storage system 100 is subdivided into three operating modes. In a charging phase of the storage system 100 as shown in Fig. 1, respective inlet flows 118, 128, 138 of a hot working fluid (such as steam, liquid or gaseous medium) that is generated by a heat source, such as a power plant, has a higher temperature than an initial temperature of the heat storing elements. The working fluid is blown into the storage through the respective openings 113, 123, 133. After heating the heat storing elements, the working fluid is blown out of the storage system 100 through the respective further openings 116, 126, 136.

The mass flows of the working fluid through the respective storage volumes V1, V2, V3 are controlled by the sizes of the respective heat storing elements of the respective types 111, 121, 131 and further types 115, 125, 135 of the heat storing elements.

In a quasi-steady-state phase of storage system 100, a closed system is present, where no heat exchange with external heat sources exists and no mass flow through the storage system 100 exists. The heat storing elements cool down through the natural convection and system heat losses.

In a discharging phase of the storage system 100 as shown in Fig. 2, the working fluid flowing e.g. in opposite direction with respect to the charging phase, flows in respective inlet flows 118, 128, 138 into the storage through the respective further openings 116, 126, 136. The working fluid has lower temperature than the temperature of the heat storing elements. After heating the working fluid and after cooling down the heat storing elements, respectively, the working fluid is blown out of the storage system 100 through the respective openings 113, 123, 133.

The respective mass flow of the working fluid through the respective openings 113, 123, 133 and further openings 116, 126, 136 is controlled by amending the size of the respective heat storing elements of the respective types 111, 121, 131 and further types 115, 125, 135. Hence, by predefining the size of the respective heat storing elements in respective storage volumes V1, V2, V3 and/or the respective opening sections 112, 122, 132 and further opening sections 117, 127, 137, the mass flow of the respective working fluid flowing through the respective storage volumes V1, V2, V3 and hence the thermal exchange between the respective storage volumes V1, V2, V3 can be controlled in particular in a passive way.

It should be noted that the term "comprising" does not exclude other elements or steps and "a" or "an" does not exelude a plurality. Also elements described in association with different embodiments may be combined. It should also be noted that reference signs in the claims should not be construed as limiting the scope of the claims.

## Claims

1. System (100) for storing heat, the system (100) comprising
a housing with a storage volume,
wherein the housing comprises an opening for connecting the storage volume to an environment, a first type (111) of first heat storing elements which is arranged within a first location within the storage volume,
a second type (121) of second heat storing elements which is arranged within a second location within the storage volume,
wherein the first heat storing elements of the first type (111) comprise a respective first element size,
wherein the second storing elements of the second type (121) comprise a respective second element size,
wherein the first storing element size differs from the second element size,
**characterised in that** the housing comprises a first housing section (110) and the storage volume comprises a first storage volume (V1), wherein the first housing section (110) comprises a first opening (113) forming an opening for connecting the first storage volume (V1) to the environment,
wherein the first type (111) of first heat storing elements is arranged within the first housing section (110) forming the first location,
wherein the housing further comprises a second housing section (120) and the storage volume comprises a second storage volume (V2),
wherein the second housing section (120) comprises a second opening (123) for connecting the second storage volume (V2) to the environment,
wherein the first storage volume (V1) and the second storage volume (V2) are interconnected for forming a common storage volume,
wherein the second type (121) of second heat storing elements is arranged within the second housing section (120) forming the second location.

2. System (100) according to claim 1,
wherein the housing further comprises a further opening for connecting the storage volume to the environment,
wherein the further opening is spaced apart from the opening,
wherein the first type (111) of first heat storing elements is arranged within the opening forming the first location,
wherein the second type (121) of second heat storing elements is arranged within the further opening forming the second location.

3. System (100) according to claim 2,
wherein the housing further comprises a center section arranged between the opening and the further opening,
wherein an additional further type of additional further heat storing elements is located within the centre section,
wherein the additional further heat storing elements of the additional further type comprise a respective additional further element size,
wherein the additional further storing element size differs from the first element size and/or the second element size.

4. System (100) according to one of the claims 1 to 3,
wherein the first housing section (110) comprises a first centre section (114) and a first opening section (112) which comprises the first opening (113),
wherein the first type (111) of first heat storing elements is arranged within the first opening section (112).

5. System (100) according to claim 4,
wherein the first opening section (112) comprises a tapering profile in such a manner that a flow diameter at the first opening (113) is smaller than at a transition section between the first opening section (112) and the first centre section (114) for forming a diffusor section or a nozzle section, respectively.

6. System (100) according to claim 4 or 5,
wherein the first type (111) of first heat storing elements is additionally arranged within the first centre section (114).

7. System (100) according to claim 4 or 5,
a further first type (115) of further first heat storing elements,
wherein the further first heat storing elements differ in size and/or material from the first heat storing elements,
wherein the further first type (115) of first heat storing elements is additionally arranged within the first centre section (114).

8. System (100) according to one of the claims 1 to 7,
wherein the first housing section (110) further comprises a further first opening (116) for connecting the first storage volume (V1) to the environment,
wherein the further first opening (116) is spaced apart from the first opening (113).

9. System (100) according to one of the claims 1 to 8,
wherein the first housing section (110) comprises a further first opening section (117) which comprises the further first opening (116),
wherein the first type (111) of the first heat storing elements is arranged within the further first opening section (117).

10. System (100) according to one of the claims 1 to 9,
wherein the second housing section (120) comprises a second center section and a second opening section (122) which comprises the second opening (123),
wherein the second type (121) of second heat storing elements is arranged within the second opening section (122).

11. System (100) according to claim 10,
wherein the second opening section (122) comprises a tapering profile in such a manner that a flow diameter at the second opening (123) is smaller than at a transition section between the second opening section (122) and the second centre section (124) for forming a diffusor section or a nozzle section, respectively.

12. System (100) according to claim 10 or 11,
wherein the second type (121) of second heat storing elements is additionally arranged within the second centre section (124).

13. System (100) according to claim 10 or 11, further comprising
a further second type (125) of further second heat storing elements,
wherein the further second heat storing elements differ in size and/or material from the second heat storing elements,
wherein the further second type (125) of second heat storing elements (121) is additionally arranged within the second centre section (124).

14. System (100) according to one of the claims 1 to 13,
wherein the second housing section (120) further comprises a further second opening (126) for connecting the second storage volume (V2) to the environment,
wherein the further second opening (126) is spaced apart from the second opening (123),
wherein a further second type (125) of further second heat storing elements is arranged within the further second opening (126).

15. Method for manufacturing a system (100) for storing heat according to any of the preceding claims, the method comprising
providing a first housing section (110) with a first storage volume (V1),
wherein the first housing comprises a first opening (113) for connecting the first storage volume (V1) to an environment,
providing a first type (111) of first heat storing elements,
arranging the first type of first heat storing elements within the first housing section (110),
providing a second housing section (120) with a second storage volume (V2),
wherein the second housing section (120) comprises a second opening (123) for connecting the second storage volume (V2) to the environment,
wherein the first storage volume (V1) and the second storage volume (V2) are interconnected for forming a common storage volume,
providing a second type (121) of second heat storing elements, and
arranging the second type (121) of second heat storing elements within the second housing section (120),
wherein the first heat storing elements of the first type (111) comprise a respective first heat storing element size, wherein the second heat storing elements of the second type (121) comprise a respective second element size,
wherein the first element size differs from the second element size.

## Patentansprüche

1. System (100) zum Speichern von Wärme, das Folgendes umfasst:
ein Gehäuse mit einem Speichervolumen,
wobei das Gehäuse eine Öffnung zum Verbinden des Speichervolumens mit einer Umgebung umfasst,
einen ersten Typ (111) erster Wärmespeicherelemente, der an einer ersten Stelle in dem Speichervolumen angeordnet ist,
einen zweiten Typ (121) zweiter Wärmespeicherelemente, der an einer zweiten Stelle in dem Speichervolumen angeordnet ist,
wobei die ersten Wärmespeicherelemente vom ersten Typ (111) eine entsprechende erste Elementgröße aufweisen,
wobei die zweiten Speicherelemente vom zweiten Typ (121) eine entsprechende zweite Elementgröße aufweisen,
wobei sich die erste Speicherelementgröße von der zweiten Elementgröße unterscheidet,
**dadurch gekennzeichnet, dass**
das Gehäuse einen ersten Gehäuseabschnitt (110) und das Speichervolumen ein erstes Speichervolumen (V1) umfasst,
wobei der erste Gehäuseabschnitt (110) eine erste Öffnung (113) umfasst, die eine Öffnung zum Verbinden des ersten Speichervolumens (V1) mit der Umgebung bildet,
wobei der erste Typ (111) erster Wärmespeicherelemente in dem ersten Gehäuseabschnitt (110) angeordnet ist, der die erste Stelle bildet,
wobei das Gehäuse ferner einen zweiten Gehäuseabschnitt (120) und das Speichervolumen ein zweites Speichervolumen (V2) umfasst,
wobei der zweite Gehäuseabschnitt (120) eine zweite Öffnung (123) zum Verbinden des zweiten Speichervolumens (V2) mit der Umgebung umfasst,
wobei das erste Speichervolumen (V1) und das zweite Speichervolumen (V2) zum Bilden eines gemeinsamen Speichervolumens miteinander verbunden sind,
wobei der zweite Typ (121) zweiter Wärmespeicherelemente in dem zweiten Gehäuseabschnitt (120) angeordnet ist, der die zweite Stelle bildet.

2. System (100) nach Anspruch 1,
wobei das Gehäuse ferner eine weitere Öffnung zum Verbinden des Speichervolumens mit der Umgebung umfasst,
wobei die weitere Öffnung von der Öffnung beabstandet ist,
wobei der erste Typ (111) erster Wärmespeicherelemente in der Öffnung angeordnet ist, die die erste Stelle bildet,
wobei der zweite Typ (121) zweiter Wärmespeicherelemente in der weiteren Öffnung angeordnet ist, die die zweite Stelle bildet.

3. System (100) nach Anspruch 2,
wobei das Gehäuse ferner einen mittleren Abschnitt umfasst, der zwischen der Öffnung und der weiteren Öffnung angeordnet ist,
wobei sich ein zusätzlicher, weiterer Typ zusätzlicher, weiterer Wärmespeicherelemente in dem mittleren Abschnitt befindet,
wobei die zusätzlichen, weiteren Wärmespeicherelemente von dem zusätzlichen, weiteren Typ eine entsprechende zusätzliche, weitere Elementgröße aufweisen,
wobei sich die zusätzliche, weitere Speicherelementgröße von der ersten und/oder der zweiten Elementgröße unterscheidet.

4. System (100) nach einem der Ansprüche 1 bis 3,
wobei der erste Gehäuseabschnitt (110) einen ersten mittleren Abschnitt (114) und einen ersten Öffnungsabschnitt (112) umfasst, der die erste Öffnung (113) umfasst,
wobei der erste Typ (111) erster Wärmespeicherelemente in dem ersten Öffnungsabschnitt (112) angeordnet ist.

5. System (100) nach Anspruch 4,
wobei der erste Öffnungsabschnitt (112) ein sich auf solche Weise verjüngendes Profil aufweist, dass zum Bilden eines Diffusor- beziehungsweise eines Düsenabschnitts ein Strömungsdurchmesser an der ersten Öffnung (113) geringer ist als an einem Übergangsabschnitt zwischen dem ersten Öffnungsabschnitt (112) und dem ersten mittleren Abschnitt (114).

6. System (100) nach Anspruch 4 oder 5,
wobei der erste Typ (111) erster Wärmespeicherelemente zusätzlich in dem ersten mittleren Abschnitt (114) angeordnet ist.

7. System (100) nach Anspruch 4 oder 5,
ein weiterer Typ (115) weiterer erster Wärmespeicherelemente,
wobei sich die weiteren ersten Wärmespeicherelemente in Größe und/oder Material von den ersten Wärmespeicherelementen unterscheiden,
wobei der weitere erste Typ (115) erster Wärmespeicherelemente zusätzlich in dem ersten mittleren Abschnitt (114) angeordnet ist.

8. System (100) nach einem der Ansprüche 1 bis 7,
wobei der erste Gehäuseabschnitt (110) ferner eine weitere erste Öffnung (116) zum Verbinden des ersten Speichervolumens (V1) mit der Umgebung umfasst,
wobei die weitere erste Öffnung (116) von der ersten Öffnung (113) beabstandet ist.

9. System (100) nach einem der Ansprüche 1 bis 8,
wobei der erste Gehäuseabschnitt (110) einen weiteren ersten Öffnungsabschnitt (117) umfasst, der die weitere erste Öffnung (116) umfasst,
wobei der erste Typ (111) der ersten Wärmespeicherelemente in dem weiteren ersten Öffnungsabschnitt (117) angeordnet ist.

10. System (100) nach einem der Ansprüche 1 bis 9,
wobei der zweite Gehäuseabschnitt (120) einen zweiten mittleren Abschnitt und einen zweiten Öffnungsabschnitt (122) umfasst,
der die zweite Öffnung (123) umfasst,
wobei der zweite Typ (121) zweiter Wärmespeicherelemente in dem zweiten Öffnungsabschnitt (122) angeordnet ist.

11. System (100) nach Anspruch 10,
wobei der zweite Öffnungsabschnitt (122) ein sich auf solche Weise verjüngendes Profil aufweist, dass zum Bilden eines Diffusor- beziehungsweise eines Düsenabschnitts ein Strömungsdurchmesser an der zweiten Öffnung (123) geringer ist als an einem Übergangsabschnitt zwischen dem zweiten Öffnungsabschnitt (122) und dem zweiten mittleren Abschnitt (124).

12. System (100) nach Anspruch 10 oder 11,
wobei der zweite Typ (121) zweiter Wärmespeicherelemente zusätzlich in dem zweiten mittleren Abschnitt (124) angeordnet ist.

13. System (100) nach Anspruch 10 oder 11, das ferner Folgendes umfasst:
einen weiteren zweiten Typ (125) weiterer zweiter Wärmespeicherelemente,
wobei sich die weiteren zweiten Wärmespeicherelemente in Größe und/oder Material von den zweiten Wärmespeicherelementen unterscheiden,
wobei der weitere zweite Typ (125) zweiter Wärmespeicherelemente (121) zusätzlich in dem zweiten mittleren Abschnitt (124) angeordnet ist.

14. System (100) nach einem der Ansprüche 1 bis 13,
wobei der zweite Gehäuseabschnitt (120) ferner eine weitere zweite Öffnung (126) zum Verbinden des zweiten Speichervolumens (V2) mit der Umgebung umfasst,
wobei die weitere zweite Öffnung (126) von der zweiten Öffnung (123) beabstandet ist,
wobei ein weiterer zweiter Typ (125) weiterer zweiter Wärmespeicherelemente in der weiteren zweiten Öffnung (126) angeordnet ist.

15. Verfahren zum Fertigen eines Systems (100) zum Speichern von Wärme nach einem der vorhergehenden Ansprüche, wobei das Verfahren Folgendes umfasst:
Bereitstellen eines ersten Gehäuseabschnitts (110) mit einem ersten Speichervolumen (V1),
wobei das erste Gehäuse eine erste Öffnung (113) zum Verbinden des ersten Speichervolumens (V1) mit einer Umgebung umfasst,
Bereitstellen eines ersten Typs (111) erster Wärmespeicherelemente,
Anordnen des ersten Typs erster Wärmespeicherelemente in dem ersten Gehäuseabschnitt (110),
Bereitstellen eines zweiten Gehäuseabschnitts (120) mit einem zweiten Speichervolumen (V2),
wobei der zweite Gehäuseabschnitt (120) eine zweite Öffnung (123) zum Verbinden des zweiten Speichervolumens (V2) mit der Umgebung umfasst,
wobei das erste Speichervolumen (V1) und das zweite Speichervolumen (V2) zum Bilden eines gemeinsamen Speichervolumens miteinander verbunden sind,
Bereitstellen eines zweiten Typs (121) zweiter Wärmespeicherelemente und
Anordnen des zweiten Typs (121) zweiter Wärmespeicherelemente in dem zweiten Gehäuseabschnitt (120),
wobei die ersten Wärmespeicherelemente vom ersten Typ (111) eine entsprechende erste Wärmespeicherelementgröße aufweisen,
wobei die zweiten Wärmespeicherelemente vom zweiten Typ (121) eine entsprechende zweite Elementgröße aufweisen,
wobei sich die erste Elementgröße von der zweiten Elementgröße unterscheidet.

## Revendications

1. Système (100) permettant de stocker de la chaleur, le système (100) comprenant
un logement pour un volume de stockage,
dans lequel le logement comprend une ouverture permettant de raccorder le volume de stockage à un environnement, un premier type (111) de premiers éléments de stockage de chaleur qui est agencé dans un premier emplacement dans le volume de stockage,
un second type (121) de seconds éléments de stockage de chaleur qui est agencé dans un second emplacement dans le volume de stockage,
dans lequel les premiers éléments de stockage de chaleur du premier type (111) comprennent une première taille d'élément respective,
dans lequel les seconds éléments de stockage du second type (121) comprennent une seconde taille d'élément respective,
dans lequel la première taille d'élément de stockage diffère de la seconde taille d'élément,
**caractérisé en ce que**
le logement comprend une première section de logement (110) et le volume de stockage comprend un premier volume de stockage (V1),
dans lequel la première section de logement (110) comprend une première ouverture (113) formant une ouverture permettant de connecter le premier volume de stockage (V1) à l'environnement,
dans lequel le premier type (111) des premiers éléments de stockage de chaleur est agencé dans la première section de logement (110) formant le premier emplacement,
dans lequel le logement comprend en outre une seconde section de logement (120) et le volume de stockage comprend un second volume de stockage (V2),
dans lequel la seconde section de logement (120) comprend une seconde ouverture (123) permettant de raccorder le second volume de stockage (V2) à l'environnement,
dans lequel le premier volume de stockage (V1) et le second volume de stockage (V2) sont interconnectés afin de former un volume de stockage commun,
dans lequel le second type (121) de seconds éléments de stockage de chaleur est agencé dans la seconde section de logement (120) formant le second emplacement.

2. Système (100) selon la revendication 1,
dans lequel le logement comprend en outre une ouverture supplémentaire permettant de raccorder le volume de stockage à l'environnement,
dans lequel l'ouverture supplémentaire est espacée de l'ouverture,
dans lequel le premier type (111) de premiers éléments de stockage de chaleur est agencé dans l'ouverture formant le premier emplacement,
dans lequel le second type (121) de seconds éléments de stockage de chaleur est agencé dans l'ouverture supplémentaire formant le second emplacement.

3. Système (100) selon la revendication 2,
dans lequel le logement comprend en outre une section centrale agencée entre l'ouverture et l'ouverture supplémentaire,
dans lequel un type supplémentaire additionnel d'éléments de stockage de chaleur supplémentaires additionnels est situé dans la section centrale,
dans lequel les éléments de stockage de chaleur supplémentaires additionnels du type supplémentaire additionnel comprennent une taille d'élément supplémentaire additionnelle respective,
dans lequel la taille de l'élément de stockage supplémentaire additionnel diffère de la première taille d'élément et/ou de la seconde taille d'élément.

4. Système (100) selon l'une quelconque des revendications 1 à 3,
dans lequel la première section de logement (110) comprend une première section centrale (114) et une première section d'ouverture (112) qui comprend la première ouverture (113),
dans lequel le premier type (111) des premiers éléments de stockage de chaleur est agencé dans la première section d'ouverture (112).

5. Système (100) selon la revendication 4,
dans lequel la première section d'ouverture (112) comprend un profil conique de telle sorte qu'un diamètre d'écoulement à la première ouverture (113) soit inférieur à celui à une section de transition entre la première section d'ouverture (112) et la première section centrale (114) afin de former une section de diffuseur ou une section de buse, respectivement.

6. Système (100) selon la revendication 4 ou 5,
dans lequel le premier type (111) des premiers éléments de stockage de chaleur est en outre agencé dans la première section centrale (114).

7. Système (100) selon la revendication 4 ou 5,
comprenant un premier type (115) supplémentaire de premiers éléments de stockage de chaleur supplémentaires,
dans lequel les premiers éléments de stockage de chaleur supplémentaires diffèrent en taille et/ou en matériau des premiers éléments de stockage de chaleur,
dans lequel le premier type supplémentaire (115) des premiers éléments de stockage de chaleur est en outre agencé dans la première section centrale (114).

8. Système (100) selon l'une quelconque des revendications 1 à 7,
dans lequel la première section de logement (110) comprend en outre une première ouverture supplémentaire (116) permettant de raccorder le premier volume de stockage (V1) à l'environnement,
dans lequel la première ouverture supplémentaire (116) est espacée de la première ouverture (113).

9. Système (100) selon l'une quelconque des revendications 1 à 8,
dans lequel la première section de logement (110) comprend une première section d'ouverture supplémentaire (117) qui comprend la première ouverture supplémentaire (116),
dans lequel le premier type (111) des premiers éléments de stockage de chaleur est agencé dans la première section d'ouverture supplémentaire (117).

10. Système (100) selon l'une quelconque des revendications 1 à 9,
dans lequel la seconde section de logement (120) comprend une seconde section centrale et une seconde section d'ouverture (122) qui comprend la seconde ouverture (123),
dans lequel le second type (121) de seconds éléments de stockage de chaleur est agencé dans la seconde section d'ouverture (122).

11. Système (100) selon la revendication 10,
dans lequel la seconde section d'ouverture (122) comprend un profil conique de telle sorte qu'un diamètre d'écoulement à la seconde ouverture (123) soit inférieur à celui à une section de transition entre la seconde section d'ouverture (122) et la seconde section centrale (124) afin de former une section de diffuseur ou une section de buse, respectivement.

12. Système (100) selon la revendication 10 ou 11,
dans lequel le second type (121) de seconds éléments de stockage de chaleur est en outre agencé dans la seconde section centrale (124).

13. Système (100) selon la revendication 10 ou 11, comprenant en outre
un second type supplémentaire (125) de seconds éléments de stockage de chaleur supplémentaires,
dans lequel les seconds éléments de stockage de chaleur supplémentaires diffèrent en taille et/ou en matériau des seconds éléments de stockage de chaleur,
dans lequel le second type supplémentaire (125) de seconds éléments de stockage de chaleur (121) est en outre agencé dans la seconde section centrale (124).

14. Système (100) selon l'une quelconque des revendications 1 à 13,
dans lequel la seconde section de logement (120) comprend en outre une seconde ouverture supplémentaire (126) permettant de raccorder le second volume de stockage (V2) à l'environnement,
dans lequel la seconde ouverture de stockage (126) est espacée de la seconde ouverture (123),
dans lequel un second type supplémentaire (125) de seconds éléments de stockage de chaleur supplémentaires est agencé dans la seconde ouverture supplémentaire (126).

15. Procédé de fabrication d'un système (100) permettant de stocker la chaleur selon l'une quelconque des revendications précédentes, le procédé comprenant
la fourniture d'une première section de logement (110) avec un premier volume de stockage (V1),
dans lequel le premier logement comprend une première ouverture (113) permettant de raccorder le premier volume de stockage (V1) à un environnement,
la fourniture d'un premier type (111) de premiers éléments de stockage de chaleur,
l'agencement du premier type de premiers éléments de stockage de chaleur dans la première section de logement (110),
la fourniture d'une seconde section de logement (120) avec un second volume de stockage (V2),
dans lequel la seconde section de logement (120) comprend une seconde ouverture (123) permettant de raccorder le second volume de stockage (V2) à l'environnement,
dans lequel le premier volume de stockage (V1) et le second volume de stockage (V2) sont interconnectés afin de former un volume de stockage commun,
la fourniture d'un second type (121) de seconds éléments de stockage de chaleur, et
l'agencement du second type (121) de seconds éléments de stockage de chaleur dans la seconde section de logement (120),
dans lequel les premiers éléments de stockage de chaleur du premier type (111) comprennent une première taille d'élément de stockage de chaleur respective,
dans lequel les seconds éléments de stockage de chaleur du second type (121) comprennent une seconde taille d'élément respective,
dans lequel la première taille d'élément diffère de la seconde taille d'élément.
